# NEUE EUROPÄISCHE PATENTSCHRIFT

(11) **EP 2 724 086 B2**
(45) Veröffentlichungstag und Bekanntmachung des Hinweises auf die Entscheidung über den Einspruch: **30.10.2024**
(45) Hinweis auf die Patenterteilung: 03.10.2018
(21) Anmeldenummer: 12735798.6
(22) Anmeldetag: 19.06.2012
(51) Int. Cl.: F24H 3/04, H05B 3/50, B60H 1/22, F24H 3/08, F24H 9/18

(54) **WÄRMEÜBERTRAGER**
HEAT EXCHANGER
ÉCHANGEUR DE CHALEUR

(30) Priorität: 21.06.2011 DE 102011077922
(43) Veröffentlichungstag der Anmeldung: 30.04.2014
(73) Patentinhaber: MAHLE Behr GmbH & Co. KG, 70469 Stuttgart (DE)
(72) Erfinder: KOHL, Michael, 74321 Bietigheim-Bissingen (DE); KRUMBACH, Karl-Gerd, 71576 Burgstetten (DE); SPRANGER, Thomas, 70619 Stuttgart (DE); SCHENK, Frank-Heiner, 70193 Stuttgart (DE)
(74) Vertreter: Grauel, Andreas
(86) Internationale Anmeldenummer: PCT/EP2012/061693
(87) Internationale Veröffentlichungsnummer: WO 2012/175488

(56) Entgegenhaltungen:
- EP-A1- 0 573 691
- EP-A1- 0 573 691
- EP-A1- 1 681 906
- EP-A1- 1 681 906
- EP-A1- 2 190 256
- EP-A1- 2 506 661
- EP-A2- 0 340 550
- EP-A2- 0 340 550
- EP-A2- 1 545 157
- EP-A2- 1 545 157
- EP-A2- 2 145 782
- DE-A1- 102006 018 150
- DE-A1- 102006 018 150
- DE-A1- 102011 015 944
- DE-A1- 19 848 169
- DE-C1- 3 942 266
- DE-C1- 3 942 266
- US-A- 4 331 861
- US-A- 4 331 861
- US-A1- 2009 107 985
- US-A1- 2009 107 985
- US-B1- 6 455 822
- Rohr (technik) Wikipedia Auszug

## Beschreibung

Die Erfindung betrifft einen Wärmeübertrager gemäß dem Oberbegriff des Anspruches 1, eine Kraftfahrzeugklimaanlage gemäß dem Oberbegriff des Anspruches 8 und ein Verfahren zur Herstellung eines Wärmeübertragers oder einer Kraftfahrzeugklimaanlage gemäß dem Oberbegriff des Anspruches 9.

Kraftfahrzeugklimaanlagen dienen dazu, die dem Innenraum eines Kraftfahrzeuges zuzuführende Luft zu erwärmen und/oder zu kühlen. In Kraftfahrzeug-klimaanlagen werden Wärmeübertrager als elektrische Heizeinrichtungen eingesetzt, um die Luft zu erwärmen, welche dem Innenraum zugeführt wird. Die elektrische Heizeinrichtung umfasst PTC-Elemente. PTC-Elemente (PTC: Positive Temperature Coefficient) sind Strom lei-tendeMaterialien,dieeinen elektrischenWiderstandauf-weisen und bei tieferen Temperaturen den Strom besser leiten können als bei höheren Temperaturen. Ihr elektri-scher Widerstand vergrößert sich somit bei steigender Temperatur. Das PTC-Element besteht im Allgemeinen aus Keramik und ist ein Kaltleiter. Dadurch stellt sichun-abhängig von den Randbedingungen - wie z. B. ange-legte

Spannung, Nominalwiderstand oder Luftmen-ge an dem PTC-Element-eine sehr gleichmäßige Ober-flächentemperatur am PTC-Element ein. Eine Überhit-zung kann verhindert werden wie sie z. B. mit einem nor-malen Wärme abgebenden Heizdraht auftreten könnte, da hier unabhängig von den Randbedingungen immer ungefähr der gleiche Widerstand und dadurch eine im Wesentlichen identische elektrische Heizleistung aufge-bracht wird.

Der Wärmeübertrager umfasst PTC-Elemente, wenigstens zwei elektrische Leiter mittels denen elektrischer Strom durch das PTC-Element geleitet wird und Wärmeleitelemente, insbesondere Lamellen bzw. Well-rippen, mittels denen die Oberfläche zum Erwärmen der Luft vergrößert wird. In zunehmenden Maße werden Kraftfahrzeuge hergestellt, welche über einen ausschließlichen elektrischen Antrieb oder über einen Hybridantrieb verfügen. Kraftfahrzeugklimaanlagenfürdiese Kraftfahrzeuge verfügenimAllgemeinen nichtmehrüber einen Wärmeaustauscher zum Erwärmen der Luft, der von Kühlflüssigkeit durchströmt wird. Die gesamte Heiz-leistungderKraftfahrzeugklimaanlagemussdeshalb von der elektrischen Heizeinrichtung bzw. den PTC-Elemen-ten aufgebracht werden. Aus diesem Grund ist es erfor-derlich, die PTC-Elemente auch mit Hochspannung, z. B. im Bereich von 50 bis 600 Volt anstelle von Nieder-spannung mit 12 Volt, zu betreiben. Hochspannung in einer Kraftfahrzeugklimaanlage stellt jedoch ein Sicherheitsproblem dar, weil beispielsweise durch eine menschliche Berührung von unter Hochspannung ste-henden Teilen dem Menschen von der Hochspannung gesundheitlicher Schaden zugefügt werden kann.

Die US 4 327 282 zeigt einen Wärmeübertrager mit einem PTC-Heizelement. Mittels Kontaktplatten wird Strom durch das PTC-Heizelement geleitet und an den Kontaktplatten ist eine Isolierschicht angeordnet. Die Komponenten werden mittels eines U-förmigen Clipses zusammengehalten.

Aus der EP 1 768 458 A1 ist ein Wärme erzeugendes Element einer Heizvorrichtung zur Lufterwärmung bekannt, umfassend wenigstens ein PTC-Element und an gegenüberliegenden Seitenflächen des PTC-Elementes anliegende elektrische Leiterbahnen, wobei die beiden elektrischen Leiterbahnen außenseitig von einer nicht elektrisch leitenden Isolierschicht umgeben sind.

Die EP 0 573 691 B1 offenbart einen Wärmeübertrager.

Die US 6 455 822 B1 offenbart einen Wärmeübertrager nach dem Oberbegriff von Anspruch 1.

Die Aufgabe der vorliegenden Erfindung besteht deshalb darin, einen Wärmeübertrager und eine Kraftfahrzeugklimaanlage sowie ein Verfahren zur Herstellung eines Wärmeübertragers und einer Kraftfahrzeugklimaanlage zur Verfügung zu stellen, bei dem ein mit elektrischen Strom unter Hochspannung, z. B. mehr als 50 V, betriebener Wärmeübertrager ohne Gefährdung für die Umwelt, insbesondere Menschen, betrieben werden kann. Der Wärmeübertrager und die Kraftfahrzeugklimaanlage sollen in der Herstellung preiswert sein zuverlässig im Betrieb arbeiten.

Diese Aufgabe wird gelöst mit einem Wärmeübertrager mit den Merkmalen von Anspruch 1.

Das Rohr ist an der Auflagefläche vor dem Aufdrücken und Verformen auf das wenigstens eine elektrische Isolierelement in einem Schnitt senkrecht zu einer Längsachse des Rohres gekrümmt und danach im Wesentlichen eben ausgebildet, so dass sich an der wenigstens einen Auflagefläche an dem Rohr nach dem Aufpressen auf das wenigstens eine elektrische Isolierelement ein Biegemoment wie bei einer Blattfeder ergibt und dadurch der Heizverbund kraftschlüssig zwischen dem Rohr befestigt ist. In vorteilhafter Weise ist es dadurch nicht erforderlich, dass bei einer Befestigung des Heizverbundes an dem Rohr beispielsweise ein Spannrahmen erforderlich ist, welcher außenseitig auf das Rohr eine Kraft aufbringt.

Erfindungsgemäß ist das wenigstens eine Rohr als wenigstens ein Flachrohr ausgebildet mit zwei Breitseitenwandungen und zwei Schmalseitenwandungen und die beiden Schmalseitenwandungen sind mittels einer auf die beiden Breitseitenwandungen an je einer Auflagefläche wirkenden Druckkraft verspannt, so dass ein Heizverbund mit wenigstens einem elektrischen Widerstandsheizelement, wenigstens zwei Leitern und wenigstens einem elektrischen Isolierelement kraftschlüssig zwischen den beiden Breitseitenwandungen gehalten ist.

In einer weiteren Ausgestaltung ist die Drucckraft an der wenigstens einen Auflagefläche in einem Schnitt senkrecht zu einer Längsachse des Rohres randseitig kleiner als mittig, insbesondere ist die Druckkraft mittig um wenigstens 10%, 30%, 50% oder 100% größer als randseitig.

In einer ergänzenden Ausführungsform ist das Verhältnis zwischen der mittigen Dicke des Rohres an der wenigstens einen Auflagefläche zu der randseitigen Dicke des Rohres an der wenigstens einen Auflagefläche größer gleich ist als 1,0, und vorzugsweise kleiner als 1,5 oder 1,2 oder 1,1 ist. Die größere Dicke des Rohres mittig an der Auflagefläche als randseitig bewirkt, dass eine Biegespannung senkrecht zu einer Längsachse des Rohres nach dem Aufdrücken auf das wenigstens eine elektrische Isolierelement ständig auftritt.

Vorzugsweise liegt das Verhältnis zwischen der mittigen Dicke des Rohres an der wenigstens einen Auflagefläche zu der Dicke des Rohres außerhalb der Auflagefläche zwischen 1,1 und 2,0, vorzugsweise zwischen 1,1 und 1,5, insbesondere zwischen 1,2 und 1,7. Das Rohr weist somit zwischen der Auflagefläche und außerhalb der Auflagefläche einen Absatz auf, so dass dadurch nur an der Auflagefläche auf das wenigstens eine elektrische Isolierelement eine Druckkraft aufgebracht wird. Größere Biegespannungen an dem wenigstens einem elektrischen Isolierelement, insbesondere als Keramikplatte ausgebildet, können dadurch vermieden werden und dadurch kann ein Bruch der Keramikplatte im Wesentlichen ausgeschlossen werden.

In einer Variante liegt die Dicke des Rohres an der wenigstens einen Auflagefläche zwischen 0,7 mm und 3 mm, vorzugsweise zwischen 0,8 mm und 2 mm, insbesondere zwischen 0,9 mm und 1,7 mm, und/oder das Rohr ist insbesondere an den beiden Schmalseitenwandungen, mit einer Sollknickstelle versehen, wobei vorzugweise das Rohr an der Sollknickstelle eine kleinere Dicke aufweist als außerhalb der Sollknickstelle und/oder die beiden Schmalseitenwandungen sind außenseitig konvex gekrümmt und/oder die beiden Schmalseitenwandungen sind nach außen gebogen. Das Rohr ist an den beiden Schmalseitenwandungen vor dem Pressvorgang in dem Presswerkzeug im Allgemeinen eben und anschließend nach außen gekrümmt ausgebildet. Dabei erfolgt eine Biegung der Schmalseitenwandungen in dem Presswerkzeug im Wesentlichen an den Sollknickstellen mit der kleineren Dicke als außerhalb der Sollknickstelle. Vorzugsweise ist dabei die Dicke des Rohres an der Sollknickstelle um wenigstens 10%, 20%, 30% oder 50% kleiner als außerhalb der wenigstens einen Sollknickstelle, insbesondere an den beiden Schmalseitenwandungen.

Zweckmäßig umfasst das wenigstens eine Wärmeleitelement das wenigstens eine Rohr und/oder das wenigstens eine Wärmeleitelement umfasst Wellrippen, welche außenseitig an dem wenigstens einen Rohr, insbesondere mittels Löten oder Kleben, angeordnet sind und/oder die wenigstens zwei Leiter weisen keinen unmittelbaren Kontakt zu dem wenigstens einen Rohr auf und/oder die Breite des wenigstens einen elektrischen Isolierelementes ist größer als die Breite der wenigstens einen Auflagefläche des Rohres und/oder ist größer als die Breite des wenigstens einen Leiters in einem Schnitt senkrecht zu der Längsachse des Rohres.

In einer weiteren Ausführungsform besteht das wenigstens eine elektrische Isolierelement wenigstens teilweise, insbesondere vollständig, aus Keramik und/oder das wenigstens eine elektrische Isolierelement ist scheibenförmig oder plattenförmig ausgebildet, insbesondere rechteckförmig.

Erfindungsgemäß sind das wenigstens eine elektrische Widerstandsheizelement, die wenigstens zwei Leiter und das wenigstens eine elektrische Isolierelement zu wenigstens einem Heizverbund verbunden, welches oder welche innerhalb des wenigstens einen Rohres angeordnet ist oder sind und vorzugsweise bilden mehrere Rohre mit je einem Heizverbund mit zwischen den Rohren angeordneten Wellrippen den Wärmeübertrager, wobei insbesondere nicht mittels eines Spannrahmens oder nicht einer Feder auf die Wandungen des wenigstens einen Rohres, insbesondere die Breitseitenwandungen des wenigstens einen Flachrohres, eine Druckkraft aufgebracht ist.

Erfindungsgemäße Kraftfahrzeugklimaanlage, die wenigstens einen in dieser Schutzrechtsanmeldung beschriebenen Wärmeübertrager umfasst.

Erfindungsgemäßes Verfahren gemäß Anspruch 9, mit den Schritten: zur Verfügung stellen wenigstens eines elektrischen Widerstandsheizelementes, insbesondere wenigstens eines PTC-Elements, zur Verfügung stellen von wenigstens zwei elektrischen Leitern, insbesondere Leiterplatten, zum Durchleiten von elektrischen Strom durch das wenigstens eine elektrische Widerstandsheizelement, zur Verfügung stellen wenigstens eines Wärmeleitelements zur Übertragung von Wärme von dem wenigstens einen elektrischen Widerstandsheizelement auf ein zu erwärmendes Fluid, zur Verfügung stellen wenigstens eines elektrischen Isolierelementes zum elektrischen Isolieren des wenigstens einen Wärmeleitelements von den wenigstens zwei Leitern, Verbinden der wenigstens zwei Leiter mit dem wenigstens einen elektrischen Widerstandsheizelement, thermisches Verbinden des wenigstens einen Wärmeleitelementes mit den wenigstens zwei Leitern und/oder mit dem wenigstens einen elektrischen Widerstandsheizelement, elektrisches Isolieren der wenigstens zwei Leiter, vorzugsweise von dem wenigstens einen Wärmeleitelement, mittels des wenigstens einen elektrischen Isolierelementes, indem die wenigstens zwei Leiter mit dem wenigstens einen elektrischen Widerstandsheizelement und das wenigstens eine elektrische Isolierelement zu wenigstens einem Heizverbund verbunden werden, wobei das wenigstens eine Wärmeleitelement wenigstens ein Rohr umfasst, welche oder welches wenigstens einen Hohlraum einschließt, der Heizverbund innerhalb des Hohlraumes an dem Rohr kraftschlüssig befestigt wird, indem das Rohr auf den Heizverbund, insbesondere auf das wenigstens eine elektrische Isolierelement, verformt und gedrückt wird, so dass das Rohr auf den Heizverbund, insbesondere auf das wenigstens eine elektrische Isolierelement, unter einer Druckkraft aufgedrückt wird, wobei das Rohr innerhalb eines Presswerkzeuges auf den Heizverbund verformt und gedrückt wird.

In einer weiteren Ausgestaltung wird das Rohr mit dem Heizverbund innerhalb des Hohlraumes in das Presswerkzeug eingebracht, anschließend wird mit dem Presswerkzeug das Rohr auf den Heizverbund verformt und gedrückt und anschließend wird das Rohr aus dem Presswerkzeug herausgenommen und/oder das wenigstens eine Rohr wird als wenigstens ein Flachrohr zur Verfügung gestellt und der wenigstens eine Heizverbund wird in den wenigstens einen Hohlraum, der von dem wenigstens einem im Querschnitt geschlossenen Flachrohr eingeschlossen ist, eingebracht und anschließend wird das Flachrohr an den Schmalseitenwandungen verformt und damit auch verspannt, so dass die Breitseitenwandungen des Flachrohres auf den Heizverbund, insbesondere auf das wenigstens eine elektrische Isolierelement, unter einer Druckkraft aufgedrückt werden.

In einer ergänzenden Variante wird das Rohr an wenigstens einer Auflagefläche in dem Presswerkzeug auf den Heizverbund verformt und gedrückt und aufgrund einer konvexen Krümmung der Auflagefläche in einem Schnitt senkrecht zu einer Längsachse des Rohres wird das Rohr zuerst mittig an der wenigstens einen Auflagefläche auf den Heizverbund aufgelegt und aufgepresst und beim weiteren Verformen und Pressen in dem Presswerkzeug wird die wenigstens eine Auflagefläche auch randseitig auf dem Heizverbund aufgelegt und aufgepresst und/oder der Pressvorgang wird in dem Presswerkzeug beim Erreichen eines vorgegebenen Grenzwertes der Presskraft abgebrochen,

In einer weiteren Variante werden die beiden Schmalseitenwandungen, insbesondere an einer Sollknickstelle, während des Pressvorganges in dem Presswerkzeug nach außen gebogen.

In einer weiteren Ausgestaltung werden die Schmalseitenwandungen an einer Sollknickstelle verformt und/oder die Schmalseitenwandungen werden verformt, indem auf die Breitseitenwandungen eine Drucckraft von dem Presswerkzeug aufgebracht wird und/oder das Rohr, insbesondere an den beiden Schmalseitenwandungen, wird mit einer Sollknickstelle zur Verfügung gestellt, wobei vorzugweise das Rohr an der Sollknickstelle eine kleinere Dicke aufweist als außerhalb der Sollknickstelle und/oder das Rohr, insbesondere an den beiden Schmalseitenwandungen, wird mit wenigstens einer konvexen Auflagefläche zur Verfügung gestellt und/oder das Rohr wird außenseitig an einer Pressfläche der wenigstens einen Auflagefläche gegenüberliegend konkav gekrümmt zur Verfügung gestellt und/oder das Rohr wird dahingehend zur Verfügung gestellt, dass das Verhältnis zwischen der mittigen Dicke des Rohres an der wenigstens einen Auflagefläche zu der randseitigen Dicke des Rohres an der wenigstens einen Auflagefläche größer gleich ist als 1,0 und vorzugsweise kleiner ist als 1,5 oder 1,2 oder 1,1 und/oder das Rohr wird dahingehend zur Verfügung gestellt, dass das Verhältnis zwischen der mittigen Dicke des Rohres an der wenigstens einen Auflagefläche zu der Dicke des Rohres außerhalb der Auflagefläche zwischen 1,1 und 2,0, vorzugsweise zwischen 1,1 und 1,5, insbesondere zwischen 1,2 und 1,7 liegt und/oder das Rohr wird dahingehend zur Verfügung gestellt, dass die Konkavität an der Pressfläche zwischen 0,1 und 1,0 mm liegt und/oder das Rohr wird dahingehend zur Verfügung gestellt, dass die mittige Dicke des Rohres an der wenigstens einen Auflagefläche kleiner gleich als 1,5 mm ist und/oder das Rohr wird dahingehend zur Verfügung gestellt, dass das Rohr an der wenigstens einen Auflagefläche in einem Schnitt senkrecht zu einer Längsachse des Rohres konvex gekrümmt ist und/oder das Rohr wird dahingehend zur Verfügung gestellt, dass das Rohr außenseitig an einer Pressfläche, der wenigstens einen Auflagefläche gegenüberliegend, konkav gekrümmt ist in einem Schnitt senkrecht zu der Längsachse des Rohres.

In einer ergänzenden Ausführungsform bestehen das wenigstens eine Wärmeleitelement, insbesondere das wenigstens eine Rohr und/oder die Wellrippen, wenigstens teilweise, insbesondere vollständig, aus Metall, beispielsweise Aluminium oder Stahl, oder Kunststoff

Vorzugsweise ist das wenigstens eine elektrische Isolierelement zwischen je einer Wandung des wenigstens einen Rohres und einem Leiter angeordnet, so dass die wenigstens zwei Leiter bezüglich des wenigstens einen Rohres elektrisch isoliert sind.

In einer Variante sind in dem Hohlraum zwei, vorzugsweise im Wesentlichen rechteckförmige, Formdichtungen als elektrische Isolierelemente angeordnet oder die wenigstens eine Formdichtung ist in dem Hohlraum als ein Schlauch, insbesondere Schrumpfschlauch, ausgebildet. Die zwei im Wesentlichen rechteckförmigen Formdichtungen sind dabei zwischen jeweils einer Breitseitenwandung des wenigstens einen Flachrohres und jeweils einer Leiterplatte eingeklemmt. Der Schlauch, insbesondere als Schrumpfschlauch, welcher die Formdichtung bildet umschließt dabei die Heizeinheit mit den beiden Leiterplatten und den PTC-Elementen. Dadurch ist die Heizeinheit elektrisch isoliert.

Zweckmäßig ist die wenigstens eine Formdichtung elastisch und/oder die wenigstens eine Formdichtung besteht wenigstens teilweise aus Silikon oder Kunststoff oder Gummi und/oder die wenigstens eine Formdichtung ist eine Folie. In einer weiteren Ausführungsform umfasst die wenigstens eine Formdichtung wärmeübertragende oder wärmeleitende Partikel, z. B. Aluminiumoxid und/oder Siliziumkarbid und/oder Bornitrid.

In einer weiteren Ausgestaltung wird das wenigstens eine Rohr als wenigstens ein Flachrohr hergestellt und der wenigstens eine Heizverbund wird in den wenigstens einen Hohlraum, der von dem wenigstens einem im Querschnitt geschlossenen Flachrohr eingeschlossen ist, eingebracht und anschließend wird das Flachrohr an den Schmalseitenwandungen von einem Presswerkzeug verformt und damit auch verspannt, so dass die die Breitseitenwandungen des Flachrohres auf das wenigstens eine elektrische Isolierelement aufgedrückt werden.

In einer ergänzenden Variante ist während des Einbringens des wenigstens einen Heizverbundes in den wenigstens einen Hohlraum die Dicke des wenigstens einen Hohlraumes zwischen den beiden Breitseitenwandungen größer als die Dicke des Heizverbundes zwischen den elektrischen Isolierelementen auf den wenigstens zwei Leitern. Die Dicke des Heizverbundes wird vorzugsweise senkrecht zu einer von den Leiterplatten aufgespannten Ebene bestimmt.

In einer weiteren Variante wird nach dem Einbringen des wenigstens einen Heizverbundes in den wenigstens einen Hohlraum die Form der Wandung des Rohres verändert, insbesondere gebogen und/oder verspannt, so dass das Volumen des wenigstens einen Hohlraumes verkleinert wird und vorzugsweise dadurch der Heizverbund kraftschlüssig mit den Breitseitenwandungen des wenigstens einen Flachrohres verbunden wird.

In einer weiteren Ausgestaltung ist die wenigstens eine Formdichtung eine Folie bzw. Isolationsfolie, z. B. eine Polyimide-Folie (Kapton-Folie), (elastisch) keramisch gefüllte Folie oder eine (elastisch) keramisch gefüllte Silikonfolie.

In einer zusätzlichen Variante weist der Wärmeübertrager eine IP-Schutzklasse von 67 auf, so dass eine ausreichende Wasserdichtheit und Staubdichtheit vorhanden ist.

In einer weiteren Ausgestaltung sind die Well-rippen und das wenigstens eine Rohr mittels Kleben und/oder Löten und/oder kraftschlüssig unter Vorspannung miteinander verbunden.

In einer weiteren Ausgestaltung weist das wenigstens eine Wärmeleitelement und/oder das wenigstens eine elektrische Isolierelement eine Wärmeleitfähigkeit von wenigstens 0,5 W/mK, insbesondere wenigstens 10 W/mK auf.

In einer weiteren Ausführungsform weist das wenigstens eine elektrische Isolierelement eine elektrische Isolation von wenigstens 1 kV/mm, insbesondere wenigstens 15 kV/mm auf.

In einer Variante weist das wenigstens eine elektrische Isolierelement, vorzugsweise im Querschnitt, eine Durchschlagfestigkeit von wenigstens 1 kV auf.

In einer weiteren Ausgestaltung weist das wenigstens eine elektrische Isolierelement eine Wärmeleitfähigkeit von wenigstens 0,5 W/mK, insbesondere wenigstens 10 W/mK auf. Das wenigstens eine elektrische Isolierelement kann damit einerseits gut elektrisch isolieren und kann andererseits ausreichend gut die Wärme von dem elektrischen Widerstandsheizelement zu dem Wärmeleitelement oder den Wärmeleitelementen leiten.

Im Nachfolgenden wird ein Ausführungsbeispiel der Erfindung unter Bezugnahme auf die beigefügten Zeichnungen näher beschrieben. Es zeigt:
- Fig. 1: einen Querschnitt einer Kraftfahrzeugklimaanlage,
- Fig. 2: eine perspektivische Ansicht eines Wärmeübertragers,
- Fig. 3: eine Seitenansicht des Wärmeübertragers gemäß Fig. 2,
- Fig. 4: eine Draufsicht des Wärmeübertragers gemäß Fig. 2,
- Fig. 5: eine Explosionsdarstellung eines Heizregisters des Wärmeübertragers gemäß Fig. 2,
- Fig. 6: einen Querschnitt des Heizregisters des Wärmeübertragers gemäß Fig. 2 vor einem Verformen in einem Presswerkzeug,
- Fig. 7: einen Querschnitt des Heizregisters in dem Presswerkzeug
- Fig. 8: einen Querschnitt des Heizregisters des Wärmeübertragers gemäß Fig. 2 nach dem Verformen in dem Presswerkzeug,
- Fig. 9: einen Querschnitt eines Flachrohres des Heizregisters vor dem Verformen in dem Presswerkzeug,
- Fig. 10: einen Querschnitt eines Heizverbundes des Heizregisters und
- Fig. 11: ein Kraft-Weg-Diagramm einer Verformung des Flachrohres in dem Presswerkzeug.

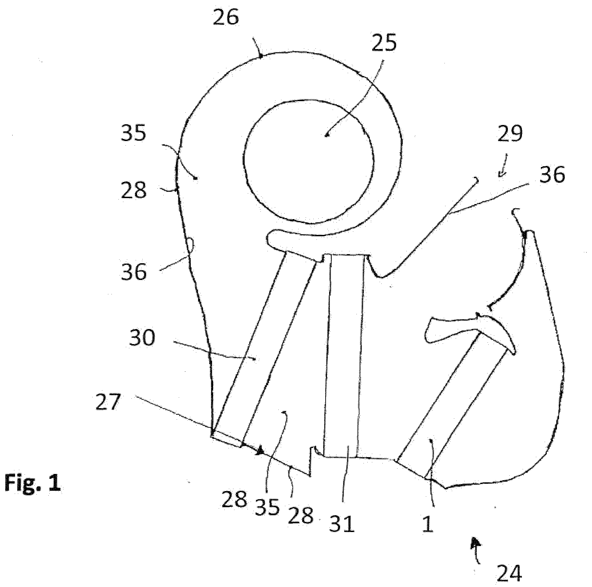

Fig. 1 zeigt eine Kraftfahrzeugklimaanlage 24. In einem Klimaanlagengehäuse 26 mit einer Bodenwandung 27 und einem Austrittsabschnitt 29 ist ein Gebläse 25, ein Luftfilter 30, ein Kältemittelverdampfer 31 und ein Wärmeübertrager 1 als eine elektrische Heizeinrichtung angeordnet. Das Klimaanlagengehäuse 26 bildet somit einen Kanal 35 zum Durchleiten der Luft. Gehäusewandungen 28 des Klimaanlagengehäuses 26 weisen an der Innenseite eine Oberfläche 36 auf, welche den Kanal 35 begrenzen. Die Luft für den Innenraum eines Kraftfahrzeuges wird mittels des Gebläses 25 durch den Luftfilter 30, den Kältemittelverdampfer 31 sowie den Wärmeübertrager 1 geleitet.

Die Kraftfahrzeugklimaanlage 24 ist somit nicht mit einem von Kühlmittel durchströmten Wärmeaustauscher versehen zum Erwärmen der durch die Kraftfahrzeuganlage 24 geleiteten Luft. Die durch die Kraftfahrzeugklimaanlage 24 geleitete Luft wird ausschließlich mittels des Wärmeübertragers 1 elektrisch erwärmt. Die Kraftfahrzeugklimaanlage 24 wird vorzugsweise in einem Kraftfahrzeug mit ausschließlich elektrischem Antrieb oder mit einem Hybridantrieb eingesetzt (nicht dargestellt). Um mittels des Wärmeübertragers 1 die notwendige elektrische Heizleistung zu erreichen, muss der Wärmeübertrager 1 mit Hochspannung, z. B. mit mehr als 50 Volt, beispielsweise mit 60 V oder 600 V, betrieben werden, um keine zu großen Stromstärken und damit zu dicke Stromleitungen (nicht dargestellt) zu erhalten.

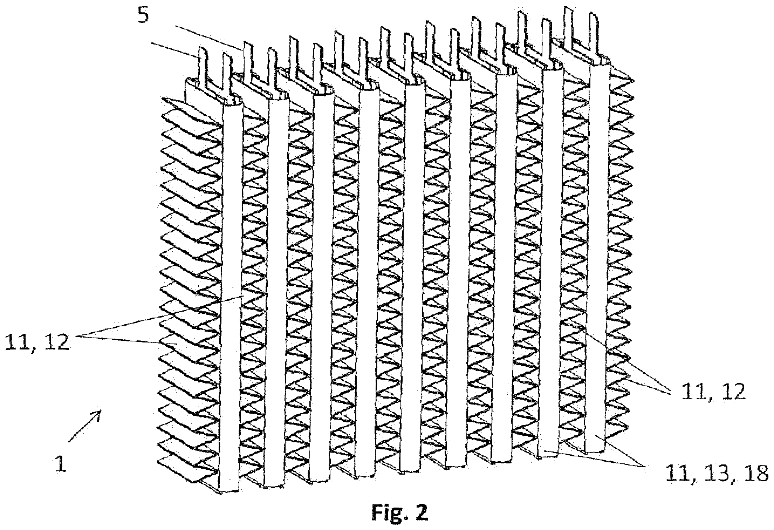

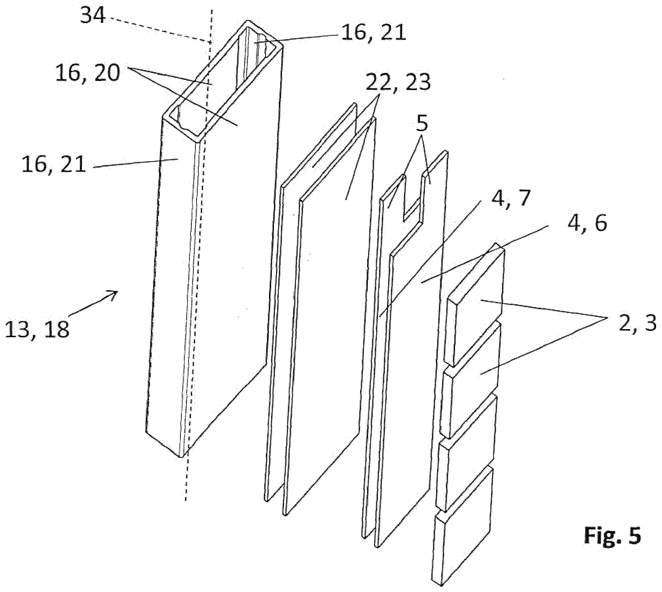

In den Fig. 2 bis 10 ist ein Ausführungsbeispiel des Wärmeübertragers 1 für die Kraftfahrzeugklimaanlage 24 dargestellt. Ein als Flachrohr 13 ausgebildetes Rohr 18 aus Aluminium mit einer Längsachse 34 weist zwei Breitseitenwandungen 20 und zwei Schmalseitenwandungen 21 (Fig. 5, 6 und 8) auf. Die Breit- und Schmalseitenwandungen 20, 21 stellen dabei Wandungen 16 dar, welche einen Hohlraum 19 innerhalb des Rohres 18 einschließen. Dabei weisen die Wandungen 18 im Querschnitt keine Fügestelle, z. B. eine Nut-Feder-Verbindung, eine Schweiß- oder Lötstelle, auf. Das Rohr 18 ist einteilig als geschlossene Wandung 18 mit Strangpressen hergestellt, so dass im Querschnitt an dem Rohr 18 keine Fügestellen erforderlich sind.

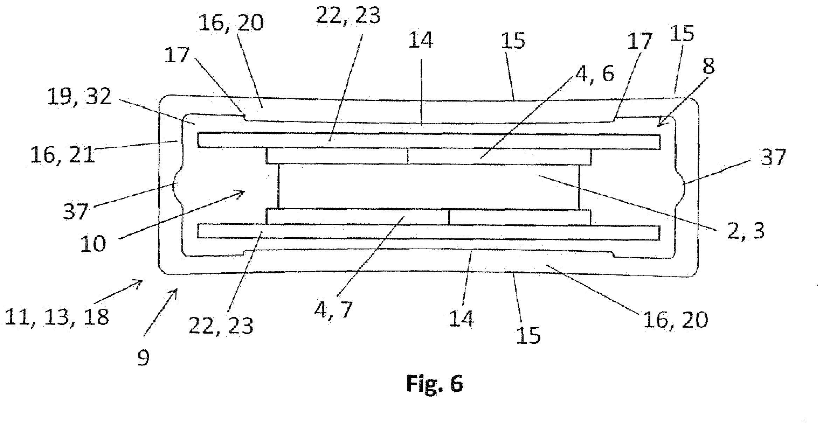

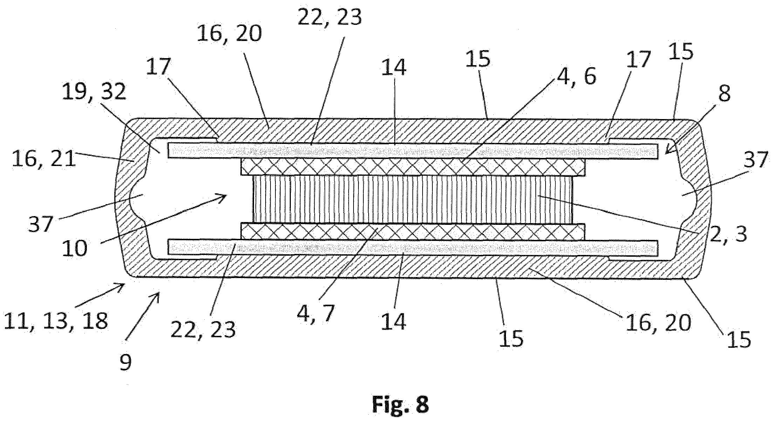

Innerhalb des Flachrohres 13 sind zwei Keramikplatten 23 als elektrische Isolierelemente 22 angeordnet. Auf den beiden rechteckförmigen (mit möglichen Ausklinkungen versehenen) Keramikplatten 23 (Fig. 6, 7 und 8) liegen zwei Leiter 4, nämlich eine erste Leiterplatte 6 und eine zweite Leiterplatte 7, auf. Zwischen den beiden Leiterplatten 6, 7 sind drei als PTC-Elemente 3 ausgebildete elektrische Widerstandsheizelemente 2 angeordnet. Die PTC-Elemente 3 sind dabei mit den beiden Leiterplatten 6, 7 mit Klebstoff miteinander verbunden. An den beiden Leitern 4 ist jeweils eine elektrische Kontaktplatte 5 ausgebildet (Fig. 2, 3 und 5). Der von den Wandungen 16 des Flachrohres 13 eingeschlossene Hohlraum 19 ist im Bereich der Schmalseitenwandungen 21 ein Leerraum, d. h. in dem Leerraum 32 ist lediglich Luft (Fig. 8).

Dadurch sind die beiden Leiterplatten 6, 7 mit den dazwischen angeordneten drei PTC-Elementen 3 aufgrund der elektrischen Isolation der Keramikplatten 23 elektrisch isoliert. Die elektrische Kontaktierung der beiden Leiterplatten 6, 7 erfolgt mittels nicht dargestellter elektrischer Leitungen an den Kontaktplatten 5. Die beiden Leiterplatten 6, 7 mit den drei PTC-Elementen 3 stellen dabei eine Heizeinheit 10 dar. Nach dem Anordnen der beiden Keramikplatten 23 an der Heizeinheit 10 bilden diese einen Heizverbund 8. Nach dem Einbringen des Heizverbundes 8 in die Flachrohre 13 mit den Wellrippen 12 liegt ein Heizregister 9 bzw. der Wärmeübertrager 1 vor. Mehrere Heizregister 9 gemäß der Darstellung in Fig. 2, 3 und 4 können auch zu einem Wärmeübertrager 1 mit einer größeren Anzahl von Heizregistern 9 miteinander verbunden werden.

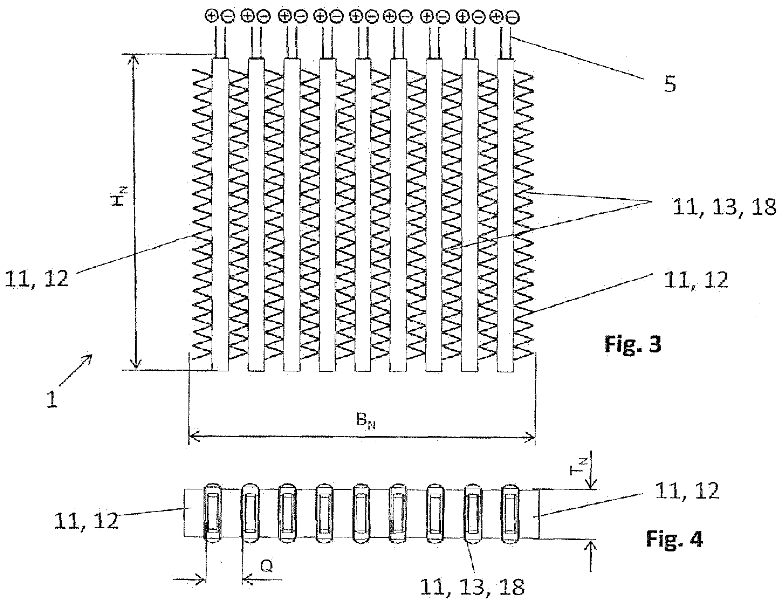

Die Netzhöhe H_{N} des Wärmeübertragers 1 gemäß der Darstellung in Fig. 3 und 4 beträgt ca. 50 bis 300 mm, vorzugsweise 100 bis 200 mm und die Netzbreite B_{N} beträgt ca. 50 bis 300 mm, vorzugsweise 100 bis 200 mm. Die Querteilung Q, d. h. der Abstand zwischen den Flachrohren 13 gemäß der Darstellung in Fig. 4, beträgt dabei zwischen 5 und 30 mm, vorzugsweise 7 bis 18 mm und die Bautiefe T_{N} gemäß der Darstellung in Fig. 4 beträgt 6 bis 50 mm, vorzugsweise 10 bis 40 mm.

Zwischen den Flachrohren 13 sind Wellrippen 12 als Wärmeleitelemente 11 angeordnet (Fig. 2 und 3). Die Wellrippen 12 dienen dabei dazu, die Oberfläche des Wärmeübertragers 1 zu vergrößern, um die von den PTC-Elementen 3 abgegebene Wärme besser an die Luft abgeben zu können, welche durch den Wärmeübertrager 1 strömt. Dabei stellen auch die Flachrohre 13 Wärmeleitelemente 11 dar. Der Heizverbund 8, bestehend aus den beiden Leiterplatten 6, 7, den PTC-Elementen 3 und den Keramikplatten 23, wird dabei erst nach der Herstellung des Flachrohres 13 in das Flachrohr 13 eingeschoben. Die Wellrippen 12 werden nach dem Einführen des Heizverbundes 8 in das Flachrohr 13 mit den Wellrippen 12 verbunden werden. Die Wellrippen 12 können dabei beispielsweise mit Kleben, Schweißen oder Löten mit den Flachrohren 13 verbunden werden. Darüber hinaus ist es auch möglich, die Wellrippen 12 mit einem Rahmen (nicht dargestellt) kraftschlüssig mit den Flachrohren 13 zu verbinden.

Dabei sind sämtliche Flachrohre 13 des Wärmeübertragers 1 staub- und flüssigkeitsdicht gegenüber der Umgebung des Wärmeübertragers 1 abgedichtet, z. B. mit Deckplatten an den oberen und unteren Enden der Flachrohre (nicht dargestellt) und/oder mit einer Dichtmasse, z. B. einer Silikondichtung. Somit kann zu den Leiterplatten 6, 7 oder den PTC-Elementen 3 innerhalb des Hohlraumes 19 keine Flüssigkeit und kein Staub eindringen. Der innerhalb des Kanales 35 der Kraftfahrzeugklimaanlage 24 angeordnete Wärmeübertrager 1 ist somit staub- und flüssigkeitsdicht abgedichtet. Staub oder Flüssigkeit innerhalb des Kanales 35 kann somit nicht in den Hohlraum 19 innerhalb der Flachrohre 13 eindringen.

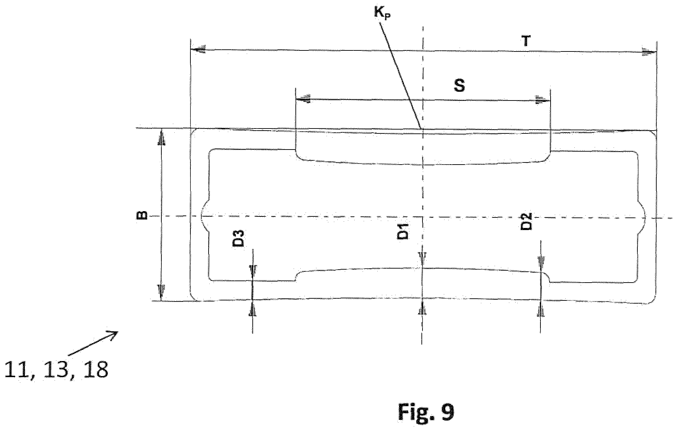

In Fig. 6 ist das Heizregister 9 und in Fig. 9 ist nur das Flachrohr 13 vor dem Verformen und Verdrücken in einem Presswerkzeug 38 dargestellt. In Fig. 8 ist das Heizregister 9 nach dem Herausnehmen aus dem Presswerkzeug 38 und dem Verformen und Aufdrücken des Flachrohres 13 dargestellt. Das Flachrohr 13 ist an den beiden Breitseitenwandungen 20 innenseitig mit einer Auflagefläche 14 ausgebildet. Dabei ist die Dicke des Rohres 18 an der Auflagefläche 14 größer als außerhalb der Auflagefläche 14, so dass sich ein Absatz 17 zwischen der Auflagefläche 14 und außerhalb der Auflagefläche 14 innenseitig an dem Flachrohr 13 ausbildet. Außenseitig an dem Flachrohr 13 ist gegenüberliegend den beiden Auflageflächen 14 an den Breitseitenwandungen 20 eine Pressfläche 15 vorhanden. Ferner ist an den beiden Schmalseitenwandungen 21 eine Sollknickstelle 37 vorhanden. Die Rohrbreite B liegt dabei zwischen 4 mm und 10 mm, vorzugsweise zwischen 5 mm und 8 mm und die Rohrtiefe T liegt zwischen 10 mm und 50 mm, vorzugsweise zwischen 18 mm und 35 mm. Das Verhältnis zwischen der Rohrtiefe T zu der Rohrbreite B im unverpressten Zustand gemäß Fig. 6 und 9 liegt ungefähr bei 3, kann jedoch auch zwischen 2 und 5,5 liegen. Das Verhältnis zwischen der Rohrtiefe T und der Rohrbreite B im verpressten Zustand gemäß Fig. 8 nach dem Herausnehmen aus dem Presswerkzeug 38 liegt bei ungefähr 3,3, kann jedoch auch im Bereich zwischen 2,5 und 6 liegen. Die beiden Breitseitenwandungen 20 sind gemäß der Darstellung in Fig. 6 und 9 vor dem Einführen in das Presswerkzeug 38 in den Schnitten gemäß Fig. 6 bis 9 senkrecht zu der Längsachse 34 des Rohres 13 nach innen gekrümmt, so dass außenseitig die beiden Breitseitenwandungen 20 konkav gekrümmt sind und innenseitig konvex gekrümmt sind, insbesondere aufgrund der unterschiedlichen Dicken des Rohres 18 an der Auflagefläche 14 eine stärkere konvexe Form der Auflagefläche 14 senkrecht zu der Längsachse 34 vorhanden ist. Der Abstand zwischen den beiden Auflageflächen 14 gemäß Fig. 6 vor dem Einführen in das Presswerkzeug 38 ist dabei größer als die Dicke des Heizverbundes 8, so dass der Heizverbund 8 in das Rohr 18 einfach ohne größere Kräfte eingeschoben werden kann.

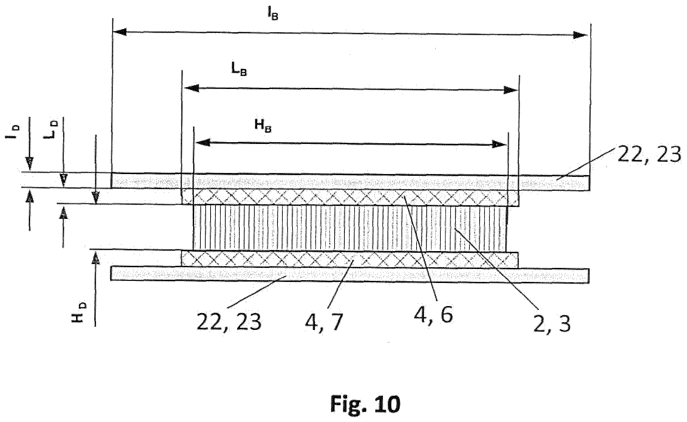

Die mittige Dicke D₁ des Flachrohres 13 beträgt 1,0 mm und die randseitige Dicke D₂ des Flachrohres 13 an der Auflagefläche 14 beträgt 0,95 mm. Dadurch ist das Verhältnis zwischen der mittigen Dicke D₁ und der randseitigen Dicke D₂ größer als 1, d. h. 1,05. Die Dicke D₃ des Rohres 18 außerhalb der Auflagefläche 14 beträgt 0,8 mm, so dass das Verhältnis von D₁ zu D₃ gleich 1,25 ist. Abweichend von diesem Ausführungsbeispiel mit einem Verhältnis von D₁ zu D₃ von 1,25 kann D₁ auch in einem weiteren Ausführungsbeispiel zwischen 1,0 mm und 1,2 mm liegen, D₂ zwischen 1,0 mm und 1,2 mm mit einem Verhältnis von D₁ zu D₂ von 1,0. D₃ beträgt dabei 0,8 mm und das Verhältnis von D₁ zu D₃ liegt zwischen 1,25 und 1,5. In einem zusätzlichen, nicht dargestellten Ausführungsbeispiel beträgt D₁ und D₂ jeweils 1,5 mm, so dass das Verhältnis von D₁ zu D₂ bei 1,0 liegt und D₃ weist eine Dicke von 1,0 mm auf, so dass das Verhältnis von D₁ zu D₃ bei 1,5 liegt. Die Breite S der Auflagefläche 14 ist in sämtlichen Ausführungsbeispielen größer als die Breite L_{B} der Leiterplatten 6,7 und kleiner als die Breite I_{B} des elektrischen Isolierelementes 22. Die Breite H_{B} des elektrischen Widerstandsheizelementes 2 ist kleiner als die Breite L_{B} der Leiterplatten 6,7 (Fig. 10). Ferner ist die Breite I_{B} des elektrischen Isolierelementes 22 um 2 mm bis 8 mm größer als die Breite L_{B} der Leiterplatten 6, 7, damit kein elektrischer Überschlag von den Leiterplatten 6,7 zu dem Flachrohr 13 möglich ist. Das Flachrohr 13 weist vor dem Verformen in dem Presswerkzeug 38 eine Außenkonkavität von Kₚ von 0,2 mm auf. Die Außenkonkavität Kₚ ist die vertikale Differenz zwischen einer fiktiven Gerade parallel zu der Zeichenebene von Fig. 9, welche außen auf der Breitseitenwandung 20 aufliegt, und der Mitte der Pressfläche 15. Vorzugsweise beträgt dabei die Außenkonkavität Kₚ zwischen 0,05 mm und 0,5 mm. Die Dicke I_{D} des elektrischen Isolierelementes 22 liegt zwischen 0,3 mm und 1,5 mm, die Dicke L_{D} der Leiterplatten 6,7 liegt zwischen 0,3 mm und 1,0 mm und die Dicke H_{D} des elektrischen Widerstandsheizelementes 2 liegt zwischen 1 mm und 3 mm, vorzugsweise zwischen 1,5 mm und 2,5 mm (Fig. 10).

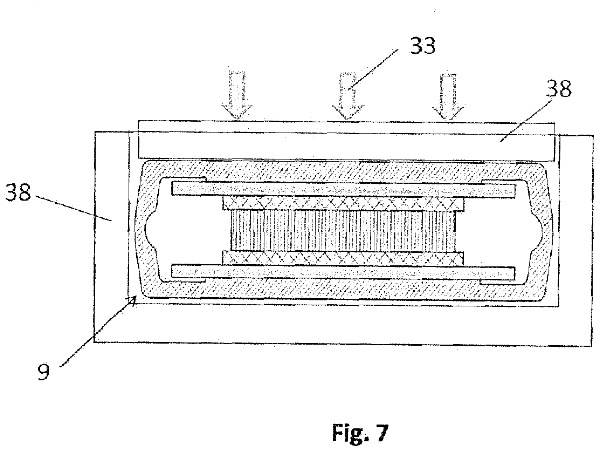

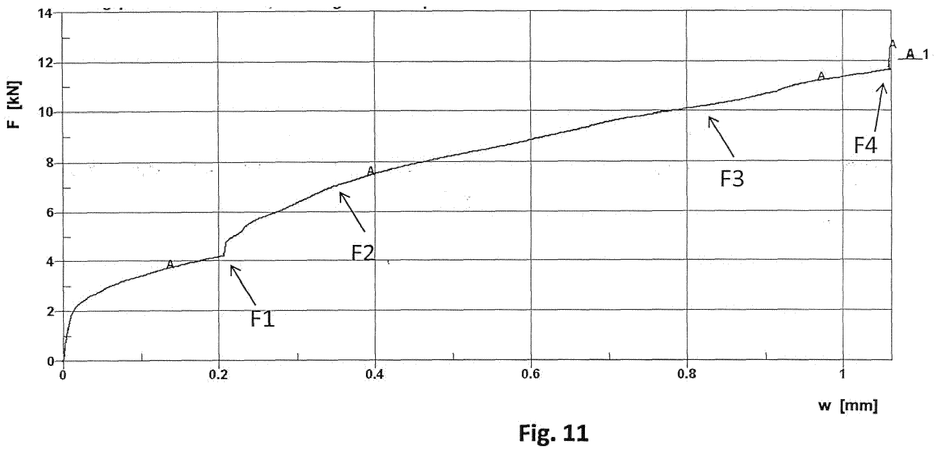

Nach dem Einführen des Heizregisters 9 in das Presswerkzeug 38 wird von dem Presswerkzeug 38 eine Druckkraft 33 auf die beiden Breitseitenwandungen 20 des Flachrohres 13 aufgebracht. Dabei sind vor dem Einführen des Flachrohres 13 die beiden Schmalseitenwandungen 21 gemäß der Darstellung in Fig. 6 im Wesentlichen senkrecht zu den beiden Breitseitenwandungen 20 ausgerichtet. In Fig. 11 ist an der Abszisse der Weg des Presswerkzeuges 38 senkrecht zu einer von den beiden Breitseitenwandungen 20 aufgespannte Ebene aufgetragen und an der Ordinate die auf von dem Presswerkzeug auf das Rohr 18 aufgebrachte Kraft 33 in kN. Zu Beginn des Pressvorganges bis zu einem Weg von ungefähr 0,2 mm bzw. bis zu dem ersten Kraftabschnitt F1 von ungefähr 4 kN, werden die beiden Schmalseitenwandungen 21 nach außen verformt im Wesentlichen an den beiden Sollknickstellen 37. Am zweiten Kraftabschnitt F2 und ungefähr 7 kN tritt ein erster Kontakt der Auflagefläche 14, d. h. der oberen Auflagefläche 14 gemäß der Darstellung in Fig. 6 und 7, mit dem oberen elektrischen Isolierelement 22 auf. Ab dem dritten Kraftabschnitt F3 von ungefähr 10 kN weist das Flachrohr 13 außenseitig keine Außenkonkavität Kₚ mehr auf. Die beiden Breitseitenwandungen 20 sind somit nach außen verformt worden, so dass an den breiten Breitseitenwandungen 20 in dem Schnitt senkrecht zu der Längsachse 34 gemäß Fig. 7 und 8 an den beiden Breitseitenwandungen 20 ein Biegemoment und dadurch auch eine Biegespannung vorliegt. Die beiden Breitseitenwandungen 20 sind somit wie eine Blattfeder vorgespannt und der Heizverbund 8 ist somit kraftschlüssig zwischen den beiden Breitseitenwandungen 20 mit den beiden Breitseitenwandungen 20 verbunden. Dabei wird diese Drucckraft von den beiden Breitseitenwandungen 20 lediglich an der Auflagefläche 14 auf die beiden elektrischen Isolierelemente 22 als Keramikplatten 23 aufgebracht. Die Breite S der Auflagefläche 14 ist dabei nur geringfügig größer als die Breite I_{B} der Keramikplatte 23, so dass an der spröden und harten Keramikplatte 23 im Wesentlichen keine Biegemomente und Biegespannungen auftreten, weil die Keramikplatte 23 zwischen der Auflagefläche 14 und den beiden Leiterplatten 6, 7 im Wesentlichen nur einer Druckkraft ausgesetzt ist. Durch das Aufbringen einer Druckkraft außenseitig auf die Pressflächen 5 an den beiden Breitseitenwandungen 20 können somit einerseits die beiden Schmalseitenwandungen 21 nach außen verformt und außerdem werden die beiden Breitseitenwandungen 20 aufgrund eines Biegemoments bzw. einer Biegespannung in den beiden Breitseitenwandungen 20 auf die beiden Keramikplatten 23 gedrückt, so dass diese als Heizverbund 8 kraftschlüssig zwischen den beiden Breitseitenwandungen 20 gehalten sind. In vorteilhafter Weise ist damit außenseitig an dem Wärmeübertrager 1 kein Spannrahmen zum kraftschlüssigen Befestigen des Heizverbundes 8 in dem Flachrohr 13 erforderlich.

In dem vierten Kraftabschnitt F4 tritt ein Kraftsprung auf. Im vierten Kraftabschnitt F4 hat das Presswerkzeug 38 das Flachrohr 13 voll auf den Heizverbund 8 verpresst, so dass ein Fließen des Materials des Flachrohres 13 sowie auch beispielsweise der elektrischen Leiterplatten 6, 7 von einem mittigen Bereich der Auflagefläche 14 zu einem randseitigen Bereich der Auflagefläche 14 auftritt. Zwischen dem dritten Kraftabschnitt F3 von ungefähr 10 kN und dem vierten Kraftabschnitt F4 von ungefähr 11,5 kN kann der Pressvorgang abgebrochen werden. Ab dem Kraftabschnitt F3 weist das Flachrohr 13 außenseitig keine Außenkonkavität kp mehr auf. Dadurch kann die Rippe eben mit dem Flachrohr angebunden werden.

Ebenso ist ab dem Kraftabschnitt F3 genügend Anlagefläche zwischen Flachrohr und Keramikplatte (23) gegeben. Ein möglichst flächiges Aufliegen der beiden Auflageflächen 14 auf dem elektrischen Isolierelement 22 als Keramikplatten 23 ist erforderlich, damit die von den PTC-Elementen 3 erzeugte Wärme auf das Flachrohr 13 mittels einer möglichst großen Wärmeleitungsfläche übertragen werden kann. Der Pressvorgang in dem Presswerkzeug 38 wird somit beim Erreichen eines vorgegebenen Grenzwertes der Presskraft, z. B. bei 11 kN ± 0,3 kN, abgebrochen.

Insgesamt betrachtet sind mit dem erfindungsgemäßen Wärmeübertrager 1 wesentliche Vorteile verbunden. Die beiden Schmalseitenwandungen 21 sind vor dem Verpressen in dem Presswerkzeug 38 gekrümmt ausgebildet und werden in dem Presswerkzeug 38 aufgrund der ebenen Ausbildung der beiden Keramikplatten 23 eben verformt, so dass an den beiden Breitseitenwandungen 20 Biegemomente und eine Biegespannung auftreten, welche auf den Heizverbund 8 eine Druckkraft an der Auflagefläche 14 aufbringen und dadurch der Heizverbund 8 kraftschlüssig an dem Flachrohr 13 befestigt ist. Die von der Auflagefläche 14 auf die Keramikplatten 23 aufgebrachten Druckkräfte sind dabei mittig wesentlich größer als randseitig, da die Biegespannung bzw. die Biegemoment in einem Schnitt senkrecht zu der Längsachse 34 des Flachrohres 13 mittig größer sind als randseitig. Die beiden Breitseitenwandungen 20 wirken somit wie eine Blattfeder, die elastisch vorgespannt ist, so dass die beiden Breitseitenwandungen 20 wie ein elastisches Federelement wirken.

### Bezugszeichenliste

- 1: Wärmeübertrager
- 2: Elektrisches Widerstandsheizelement
- 3: PTC-Element
- 4: Leiter
- 5: Elektrische Kontaktplatte
- 6: Erste Leiterplatte
- 7: Zweite Leiterplatte
- 8: Heizverbund
- 9: Heizregister
- 10: Heizeinheit
- 11: Wärmeleitelement
- 12: Wellrippen
- 13: Flachrohr
- 14: Auflagefläche
- 15: Pressfläche
- 16: Wandungen des Rohres
- 17: Absatz
- 18: Rohr
- 19: Hohlraum
- 20: Breitseitenwandung
- 21: Schmalseitenwandung
- 22: Elektrisches Isolierelement
- 23: Keramikplatte
- 24: Kraftfahrzeugklimaanlage
- 25: Gebläse
- 26: Klimaanlagengehäuse
- 27: Bodenwandung
- 28: Gehäusewandung
- 29: Austrittsabschnitt
- 30: Filter
- 31: Kältemittelverdampfer
- 32: Leerraum innerhalb des Flachrohres
- 33: Druckkraft
- 34: Längsachse
- 35: Kanal
- 36: Oberfläche
- 37: Sollknickstelle
- 38: Presswerkzeug
- H_{N}: Netzhöhe
- B_{N}: Netzbreite
- Q: Querteilung
- T_{N}: Bautiefe
- B: Rohrbreite
- T: Rohrtiefe
- S: Breite der Auflagefläche
- F1: erster Kraftabschnitt
- F2: zweiter Kraftabschnitt
- F3: dritter Kraftabschnitt
- F4: vierter Kraftabschnitt
- K_{P}: Außenkonkavität
- I_{B}: Breite des Isolierelementes
- L_{B}: Breite der Leiterplatten
- H_{B}: Breite des Heizelementes
- I_{D}: Dicke des Isolierelementes
- L_{D}: Dicke der Leiterplatten
- H_{D}: Dicke des Heizelementes
- D₁: mittige Dicke des Rohres an der Auflagefläche
- D₂: randseitige Dicke des Rohres an der Auflagefläche
- D₃: Dicke des Rohres außerhalb der Auflagefläche

## Patentansprüche

1. Wärmeübertrager (1), umfassend
- wenigstens ein elektrisches Widerstandsheizelement (2), insbesondere wenigstens ein PTC-Element (3),
- wenigstens zwei mit dem wenigstens einen elektrischen Widerstandsheizelement (2) elektrisch leitend verbundene Leiter (4), insbesondere Leiterplatten (6, 7), um elektrischen Strom durch das wenigstens eine elektrische Widerstandsheizelement (2) zu leiten und dadurch das elektrische Widerstandsheizelement (2) zu erwärmen,
- wenigstens ein Wärmeleitelement (11) zur Übertragung von Wärme von dem wenigstens einen elektrischen Widerstandsheizelement (2) auf ein zu erwärmendes Fluid,
- wenigstens ein elektrisches Isolierelement (22), welches die wenigstens zwei Leiter (4) von dem wenigstens einen Wärmeleitelement (11) elektrisch isoliert,
- wenigstens ein Rohr (18), wobei
- die wenigstens zwei Leiter (4) und das wenigstens eine elektrische Widerstandsheizelement (2) innerhalb eines von dem Rohr (18) begrenzten Hohlraumes (19) angeordnet sind und das Rohr (18) an wenigstens einer Auflagefläche (14) auf dem wenigstens einen elektrischen Isolierelement (22) unter einer Druckkraft aufliegt, wobei
das Rohr (18) an der wenigstens einen Auflagefläche (14), insbesondere senkrecht zu einer Längsachse (34) des Rohres (18) und parallel zu einer von der Auflagefläche (14) aufgespannten fiktiven Ebene, eine unterschiedliche Dicke aufweist, wobei das wenigstens eine Rohr (18) als ein Flachrohr (13) ausgebildet ist mit zwei Breitseitenwandungen (20) und zwei Schmalseitenwandungen (21) und die beiden Schmalseitenwandungen (21) mittels einer auf die beiden Breitseitenwandungen (20) an je einer Auflagefläche (14) wirkenden Druckkraft verspannt sind, so dass ein Heizverbund (8) mit wenigstens einem elektrischen Widerstandsheizelement (2), wenigstens zwei Leitern (4) und wenigstens einem elektrischen Isolierelement (22) kraftschlüssig zwischen den beiden Breitseitenwandungen (20) gehalten ist, wobei das Rohr (18) an den beiden Schmalseitenwandungen (21) mit einer Sollknickstelle (37) versehen ist, wobei das Rohr (18) an der Sollknickstelle (37) eine kleinere Dicke aufweist als außerhalb der Sollknickstelle (37), wobei das wenigstens eine elektrische Widerstandsheizelement (2), die wenigstens zwei Leiter (4) und das wenigstens eine elektrische Isolierelement (22) zu wenigstens einem Heizverbund (8) verbunden sind, welches oder welche innerhalb des wenigstens einen Rohres (18) angeordnet ist oder sind, **dadurch gekennzeichnet, dass** mehrere Rohre (18) mit je einem Heizverbund (8) und mit zwischen den Rohren (18) angeordneten Wellrippen (12) den Wärmeübertrager (1) bilden, wobei insbesondere nicht mittels eines Spannrahmens oder nicht einer Feder auf die Wandungen (16) des wenigstens einen Rohres (18), insbesondere die Breitseitenwandungen (20) des wenigstens einen Flachrohres (13), eine Druckkraft aufgebracht ist.

2. Wärmeübertrager nach Anspruch 1, **dadurch gekennzeichnet, dass** die Druckkraft an der wenigstens einen Auflagefläche (14) in einem Schnitt senkrecht zu einer Längsachse (34) des Rohres (18) randseitig kleiner ist als mittig, insbesondere die Druckkraft mittig um wenigstens 10%, 30%, 50% oder 100% größer ist als randseitig.

3. Wärmeübertrager nach einem oder mehreren der vorhergehenden Ansprüche, **dadurch gekennzeichnet, dass** das Verhältnis zwischen der mittigen Dicke des Rohres (18) an der wenigstens einen Auflagefläche (14) zu der randseitigen Dicke des Rohres (18) an der wenigstens einen Auflagefläche (14) größer oder gleich ist als 1,0, und vorzugsweise kleiner ist als 1,5 oder 1,2 oder 1,1.

4. Wärmeübertrager nach einem oder mehreren der vorhergehenden Ansprüche, **dadurch gekennzeichnet, dass** das Verhältnis zwischen der mittigen Dicke des Rohres (18) an der wenigstens einen Auflagefläche (14) zu der Dicke des Rohres (18) außerhalb der Auflagefläche (14) zwischen 1,1 und 2,0, vorzugsweise zwischen 1,1 und 1,5, insbesondere zwischen 1,2 und 1,7 liegt.

5. Wärmeübertrager nach einem oder mehreren der vorhergehenden Ansprüche, **dadurch gekennzeichnet, dass** die Dicke des Rohres (18) an der wenigstens einen Auflagefläche (14) zwischen 0,7 mm und 3 mm, vorzugsweise zwischen 0,8 mm und 2 mm, insbesondere zwischen 0,9 mm und 1,7 mm, liegt und/oder das Rohr (18), insbesondere an den beiden Schmalseitenwandungen (21), mit einer Sollknickstelle (37) versehen ist, wobei vorzugweise das Rohr (18) an der Sollknickstelle (37) eine kleinere Dicke aufweist als außerhalb der Sollknickstelle (37) und/oder die beiden Schmalseitenwandungen (21) außenseitig konvex gekrümmt sind und/oder die beiden Schmalseitenwandungen (21) nach außen gebogen sind.

6. Wärmeübertrager nach einem oder mehreren der vorhergehenden Ansprüche, **dadurch gekennzeichnet, dass** das wenigstens eine Wärmeleitelement (11) das wenigstens eine Rohr (18) umfasst und/oder das wenigstens eine Wärmeleitelement (11) Wellrippen (12) umfasst, welche außenseitig an dem wenigstens einen Rohr (18), insbesondere mittels Löten oder Kleben, angeordnet sind und/oder die wenigstens zwei Leiter (4) keinen unmittelbaren Kontakt zu dem wenigstens einen Rohr (18) aufweisen und/oder die Breite des wenigstens einen elektrischen Isolierelementes (22) größer ist als die Breite der wenigstens einen Auflagefläche (14) des Rohres (18) und/oder größer ist als die Breite des wenigstens einen Leiters (4) in einem Schnitt senkrecht zu der Längsachse (34) des Rohres (18).

7. Wärmeübertrager nach einem oder mehreren der vorhergehenden Ansprüchen, **dadurch gekennzeichnet, dass** das wenigstens eine elektrische Isolierelement (22) wenigstens teilweise, insbesondere vollständig, aus Keramik besteht und/oder das wenigstens eine elektrische Isolierelement (22) scheibenförmig oder plattenförmig ausgebildet ist, insbesondere rechteckförmig mit Ausklinkungen.

8. Kraftfahrzeugklimaanlage, **dadurch gekennzeichnet, dass** die Kraftfahrzeugklimaanlage wenigstens einen Wärmeübertrager (1) gemäß einem oder mehrerer der vorhergehenden Ansprüche umfasst.

9. Verfahren zur Herstellung eines Wärmeübertragers (1) gemäß einem oder mehreren der Ansprüche 1 bis 7 oder einer Kraftfahrzeugklimaanlage gemäß Anspruch 8, mit den Schritten:
- zur Verfügung stellen wenigstens eines elektrischen Widerstandsheizelementes (2), insbesondere wenigstens eines PTC-Elements (3),
- zur Verfügung stellen von wenigstens zwei elektrischen Leitern (4), insbesondere Leiterplatten (6, 7), zum Durchleiten von elektrischem Strom durch das wenigstens eine elektrische Widerstandsheizelement (2),
- zur Verfügung stellen wenigstens eines Wärmeleitelements (11) zur Übertragung von Wärme von dem wenigstens einen elektrischen Widerstandsheizelement (2) auf ein zu erwärmendes Fluid,
- zur Verfügung stellen wenigstens eines elektrischen Isolierelementes (22) zum elektrischen Isolieren des wenigstens einen Wärmeleitelements (11) von den wenigstens zwei Leitern (4),
- Verbinden der wenigstens zwei Leiter (4) mit dem wenigstens einen elektrischen Widerstandsheizelement (2),
- thermisches Verbinden des wenigstens einen Wärmeleitelementes (11) mit den wenigstens zwei Leitern (4) und/oder mit dem wenigstens einen elektrischen Widerstandsheizelement (2),
- elektrisches Isolieren der wenigstens zwei Leiter (4), vorzugsweise von dem wenigstens einen Wärmeleitelement (11), mittels des wenigstens einen elektrischen Isolierelementes (22), indem die wenigstens zwei Leiter (4) mit dem wenigstens einen elektrischen Widerstandsheizelement (2) und das wenigstens eine elektrische Isolierelement (22) zu wenigstens einem Heizverbund verbunden werden,
- wobei das wenigstens eine Wärmeleitelement (11) und wenigstens ein Rohr (18) vorgesehen sind, wobei das Rohr (18) wenigstens einen Hohlraum (19) einschließt,
- der Heizverbund (8) innerhalb des Hohlraumes (19) an dem Rohr (18) kraftschlüssig befestigt wird, indem das Rohr (18) auf den Heizverbund (8), insbesondere auf das wenigstens eine elektrische Isolierelement (22), verformt und gedrückt wird, so dass das Rohr (18) auf den Heizverbund (8), insbesondere das wenigstens eine elektrische Isolierelement (22), unter einer Druckkraft aufgedrückt wird,
wobei das Rohr (18) innerhalb eines Presswerkzeuges (38) auf den Heizverbund (8) verformt und gedrückt wird.

10. Verfahren nach Anspruch 9, **dadurch gekennzeichnet, dass** das Rohr (18) mit dem Heizverbund (8) innerhalb des Hohlraumes (19) in das Presswerkzeug (38) eingebracht wird, anschließend mit dem Presswerkzeug (38) das Rohr (18) auf den Heizverbund (8) verformt und gedrückt wird und anschließend das Rohr (18) aus dem Presswerkzeug (38) herausgenommen wird und/oder das wenigstens eine Rohr (18) als wenigstens ein Flachrohr (13) zur Verfügung gestellt wird und der wenigstens eine Heizverbund (8) in den wenigstens einen Hohlraum (19), der von dem wenigstens einem im Querschnitt geschlossenen Flachrohr (13) eingeschlossen ist, eingebracht wird und anschließend das Flachrohr (13) an den Schmalseitenwandungen (21) verformt und damit auch verspannt wird, so dass die Breitseitenwandungen (20) des Flachrohres (13) auf den Heizverbund (8), insbesondere auf das wenigstens eine elektrische Isolierelement (22), unter einer Druckkraft aufgedrückt werden.

11. Verfahren nach Anspruch 9 oder 10, **dadurch gekennzeichnet, dass** das Rohr (18) an wenigstens einer Auflagefläche (14) in dem Presswerkzeug (38) auf den Heizverbund (8) verformt und gedrückt wird und aufgrund einer konvexen Krümmung der Auflagefläche (14) in einem Schnitt senkrecht zu einer Längsachse (34) des Rohres (18) das Rohr (18) zuerst mittig an der wenigstens einen Auflagefläche (14) auf dem Heizverbund (8) aufgelegt und aufgepresst wird und beim weiteren Verformen und Pressen in dem Presswerkzeug (38) die wenigstens eine Auflagefläche (14) auch randseitig auf dem Heizverbund (8) aufgelegt und aufgepresst wird und/oder der Pressvorgang in dem Presswerkzeug (38) beim Erreichen eines vorgegebenen Grenzwertes der Presskraft abgebrochen wird.

12. Verfahren nach Anspruch 10 oder nach den Ansprüchen 10 und 11, **dadurch gekennzeichnet, dass** die beiden Schmalseitenwandungen (21), insbesondere an einer Sollknickstelle (37), während des Pressvorganges in dem Presswerkzeug (38) nach außen gebogen werden.

13. Verfahren nach Anspruch 10, nach Anspruch 10 und 11 oder nach Anspruch 12, **dadurch gekennzeichnet, dass** die Schmalseitenwandungen (21) an einer Sollknickstelle (37) verformt werden und/oder die Schmalseitenwandungen (21) verformt werden, indem auf die Breitseitenwandungen (20) eine Druckkraft von dem Presswerkzeug (38) aufgebracht wird und/oder das Rohr (18), insbesondere an den beiden Schmalseitenwandungen (21), mit einer Sollknickstelle (37) zur Verfügung gestellt wird, wobei vorzugweise das Rohr (18) an der Sollknickstelle (37) eine kleinere Dicke aufweist als außerhalb der Sollknickstelle (37)
und/oder das Rohr (18), insbesondere an den beiden Schmalseitenwandungen (21), mit wenigstens einer konvexen Auflagefläche (14) zur Verfügung gestellt wird und/oder das Rohr (18) außenseitig an einer Pressfläche (15), der wenigstens einen Auflagefläche (14) gegenüberliegend, konkav gekrümmt zur Verfügung gestellt wird und/oder das Rohr (18) dahingehend zur Verfügung gestellt wird, dass das Verhältnis zwischen der mittigen Dicke des Rohres (18) an der wenigstens einen Auflagefläche (14) zu der randseitigen Dicke des Rohres (18) an der wenigstens einen Auflagefläche (14) größer oder gleich ist als 1,0 und vorzugsweise kleiner ist als 1,5 oder 1,2 oder 1,1 und/oder das Rohr (18) dahingehend zur Verfügung gestellt wird, dass das Verhältnis zwischen der mittigen Dicke des Rohres (18) an der wenigstens einen Auflagefläche (14) zu der Dicke des Rohres (18) außerhalb der Auflagefläche (14) zwischen 1,1 und 2,0, vorzugsweise zwischen 1,1 und 1,5, insbesondere zwischen 1,2 und 1,7 liegt und/oder das Rohr (18) dahingehend zur Verfügung gestellt wird, dass die Konkavität an der Pressfläche (15) zwischen 0,1 und 1,0 mm liegt und/oder das Rohr (18) dahingehend zur Verfügung gestellt wird, dass die mittige Dicke des Rohres (18) an der wenigstens einen Auflagefläche (14) kleiner als 1,5 mm ist und/oder das Rohr (18) dahingehend zur Verfügung gestellt wird, dass das Rohr (18) an der wenigstens einen Auflagefläche (14) in einem Schnitt senkrecht zu einer Längsachse (34) des Rohres (18) konvex gekrümmt ist und/oder das Rohr (18) dahingehend zur Verfügung gestellt wird, dass das Rohr (18) außenseitig an einer Pressfläche (15) der wenigstens einen Auflagefläche (14) gegenüberliegend, konkav gekrümmt ist in einem Schnitt senkrecht zu der Längsachse (34) des Rohres (18).

## Claims

1. A heat exchanger (1), comprising
- at least one electrical resistance heating element (2), in particular at least one PTC element (3),
- at least two conductors (4), in particular conductor plates (6, 7), connected in electrically conductive fashion to the at least one electrical resistance heating element (2) in order to conduct electrical current through the at least one electrical resistance heating element (2) and thereby heat the electrical resistance heating element (2),
- at least one heat-conducting element (11) for transmitting heat from the at least one electrical resistance heating element (2) to a fluid to be heated,
- at least one electrical insulation element (22) which electrically insulates the at least two conductors (4) from the at least one heat-conducting element (11),
- at least one tube (18), wherein
- the at least two conductors (4) and the at least one electrical resistance heating element (2) are arranged within a cavity (19) delimited by the tube (18), and the tube (18), at at least one contact surface (14), lies against the at least one electrical insulation element (22) under the action of a pressure force, wherein
the tube (18), at the at least one contact surface (14), has a varying thickness in particular perpendicular to a longitudinal axis (34) of the tube (18) and parallel to an imaginary plane spanned by the contact surface (14), wherein the at least one tube (18) is in the form of a flat tube (13) with two wide side walls (20) and two narrow side walls (21), and the two narrow side walls (21) are braced by means of a pressure force acting on the two wide side walls (20) at in each case one contact surface (14), such that a heating assembly (8) with at least one electrical resistance heating element (2), at least two conductors (4) and at least one electrical insulation element (22) is held with a force fit between the two wide side walls (20), wherein the tube (18) is provided with a predetermined bending point (37) on the two narrow side walls (21), wherein the tube (18) has a smaller thickness at the predetermined bending point (37) than outside the predetermined bending point (37), wherein the at least one electrical resistance heating element (2), the at least two conductors (4) and the at least one electrical insulation element (22) are connected to form at least one heating assembly (8) which is or are arranged within the at least one tube (18), **characterised in that** multiple tubes (18) with in each case one heating assembly (8) and with corrugated fins (12) arranged between the tubes (18) form the heat exchanger (1), wherein in particular, no pressure force is exerted by means of a bracing frame or by means of a spring on the walls (16) of the at least one tube (18), in particular on the wide side walls (20) of the at least one flat tube (13).

2. The heat exchanger as claimed in claim 1, **characterised in that,** in a section perpendicular to a longitudinal axis (34) of the tube (18), the pressure force at the at least one contact surface (14) is lower at the edge than in the centre, in particular, the pressure force is greater, by at least 10%, 30%, 50% or 100%, in the centre than at the edge.

3. The heat exchanger as claimed in one or more of the preceding claims, **characterised in that** the ratio between the central thickness of the tube (18) at the at least one contact surface (14) and the edge thickness of the tube (18) at the at least one contact surface (14) is greater than or equal to 1.0, and preferably less than 1.5 or 1.2 or 1.1.

4. The heat exchanger as claimed in one or more of the preceding claims, **characterised in that** the ratio between the central thickness of the tube (18) at the at least one contact surface (14) and the thickness of the tube (18) outside the contact surface (14) is between 1.1 and 2.0, preferably between 1.1 and 1.5, in particular between 1.2 and 1.7.

5. The heat exchanger as claimed in one or more of the preceding claims, **characterised in that** the thickness of the tube (18) at the at least one contact surface (14) is between 0.7 mm and 3 mm, preferably between 0.8 mm and 2 mm, in particular between 0.9 mm and 1.7 mm, and/or the tube (18) is provided with a predetermined bending point (37) in particular on the two narrow side walls (21), wherein the tube (18) preferably has a smaller thickness at the predetermined bending point (37) than outside the predetermined bending point (37), and/or the two narrow side walls (21) are externally convexly curved and/or the two narrow side walls (21) are arched outward.

6. The heat exchanger as claimed in one or more of the preceding claims, **characterised in that** the at least one heat-conducting element (11) comprises the at least one tube (18), and/or the at least one heat-conducting element (11) comprises corrugated fins (12) which are arranged externally on the at least one tube (18) in particular by means of brazing or adhesive bonding, and/or the at least two conductors (4) are not in direct contact with the at least one tube (18), and/or the width of the at least one electrical insulation element (22) is greater than the width of the at least one contact surface (14) of the tube (18) and/or is greater than the width of the at least one conductor (4) in a section perpendicular to the longitudinal axis (34) of the tube (18) .

7. The heat exchanger as claimed in one or more of the preceding claims, **characterised in that** the at least one electrical insulation element (22) is composed at least partially, in particular entirely, of ceramic, and/or the at least one electrical insulation element (22) is of disk-shaped or plate-shaped form, in particular is of rectangular form with notches.

8. A motor vehicle air-conditioning system, **characterised in that** the motor vehicle air-conditioning system comprises at least one heat exchanger (1) as claimed in one or more of the preceding claims.

9. A method for producing a heat exchanger (1) as claimed in one or more of claims 1 to 7 or a motor vehicle air-conditioning system as claimed in claim 8, having the steps:
- providing at least one electrical resistance heating element (2), in particular at least one PTC element (3),
- providing at least two electrical conductors (4), in particular conductor plates (6, 7), for conducting electrical current through the at least one electrical resistance heating element (2),
- providing at least one heat-conducting element (11) for transmitting heat from the at least one electrical resistance heating element (2) to a fluid to be heated,
- providing at least one electrical insulation element (22) for electrically insulating the at least one heat-conducting element (11) from the at least two conductors (4),
- connecting the at least two conductors (4) to the at least one electrical resistance heating element (2),
- thermally connecting the at least one heat-conducting element (11) to the at least two conductors (4) and/or to the at least one electrical resistance heating element (2),
- electrically insulating the at least two conductors (4), preferably from the at least one heat-conducting element (11), by means of the at least one electrical insulation element (22), by virtue of the at least two conductors (4) with the at least one electrical resistance heating element (2) and the at least one electrical insulation element (22) being connected to form at least one heating assembly,
- wherein the at least one heat-conducting element (11) and at least one tube (18) are provided, wherein the tube (18) encloses at least one cavity (19),
- the heating assembly (8) is fastened within the cavity (19) in the tube (18) with a force fit by virtue of the tube (18) being deformed and pressed against the heating assembly (8), in particular against the at least one electrical insulation element (22), such that the tube (18) is pressed against the heating assembly (8), in particular against the at least one electrical insulation element (22), under the action of a pressure force, wherein the tube (18) is deformed and pressed against the heating assembly (8) within a pressing tool (38).

10. The method as claimed in claim 9, **characterised in that** the tube (18) with the heating assembly (8) within the cavity (19) is inserted into the pressing tool (38), the pressing tool (38) is subsequently used to deform and press the tube (18) against the heating assembly (8) and subsequently the tube (18) is removed from the pressing tool (38), and/or the at least one tube (18) is provided as at least one flat tube (13) and the at least one heating assembly (8) is inserted into the at least one cavity (19) enclosed by the at least one flat tube (13) which has a closed cross section, and subsequently, the flat tube (13) is deformed at the narrow side walls (21) and thus also braced such that the wide side walls (20) of the flat tube (13) are pressed against the heating assembly (8), in particular against the at least one electrical insulation element (22), under the action of a pressure force.

11. The method as claimed in claim 9 or 10, **characterised in that,** in the pressing tool (38), the tube (18) is deformed and pressed against the heating assembly (8) at at least one contact surface (14), and owing to a convex curvature of the contact surface (14) in a section perpendicular to a longitudinal axis (34) of the tube (18), the tube (18) is initially laid and pressed against the heating assembly (8) centrally at the at least one contact surface (14), and during the further deformation and pressing process in the pressing tool (38), the at least one contact surface (14) is also laid and pressed at the edge against the heating assembly (8), and/or the pressing process in the pressing tool (38) is terminated when a predefined limit value of the pressing force is reached.

12. The method as claimed in claim 10 or in claims 10 and 11, **characterised in that** the two narrow side walls (21) are arched outward, in particular at a predetermined bending point (37), during the pressing process in the pressing tool (38).

13. The method as claimed in claim 10, in claim 10 and 11 or in claim 12, **characterised in that** the narrow side walls (21) are deformed at a predetermined bending point (37), and/or the narrow side walls (21) are deformed by virtue of a pressure force being exerted on the wide side walls (20) by the pressing tool (38), and/or the tube (18) is provided with a predetermined bending point (37) in particular on the two narrow side walls (21), wherein preferably, the tube (18) has a smaller thickness at the predetermined bending point (37) than outside the predetermined bending point (37), and/or the tube (18), is provided with at least one convex contact surface (14) in particular at the two narrow side walls (21), and/or the tube (18) is provided so as to be concavely curved externally at a pressing surface (15), opposite the at least one contact surface (14), and/or the tube (18) is provided such that the ratio between the central thickness of the tube (18) at the at least one contact surface (14) and the edge thickness of the tube (18) at the at least one contact surface (14) is greater than or equal to 1.0, and preferably less than 1.5 or 1.2 or 1.1, and/or the tube (18) is provided such that the ratio between the central thickness of the tube (18) at the at least one contact surface (14) and the thickness of the tube (18) outside the contact surface (14) is between 1.1 and 2.0, preferably between 1.1 and 1.5, in particular between 1.2 and 1.7, and/or the tube (18) is provided such that the concavity at the pressing surface (15) is between 0.1 and 1.0 mm, and/or the tube (18) is provided such that the central thickness of the tube (18) at the at least one contact surface (14) is less than 1.5 mm, and/or the tube (18) is provided such that, in a section perpendicular to a longitudinal axis (34) of the tube (18), the tube (18) is convexly curved at the at least one contact surface (14), and/or, in a section perpendicular to the longitudinal axis (34) of the tube (18), the tube (18) is provided such that the tube (18) is concavely curved externally at a pressing surface (15), opposite the at least one contact surface (14).

## Revendications

1. Echangeur de chaleur (1) comprenant :
- au moins un élément chauffant à résistance électrique (2), en particulier au moins un élément (3) - CTP - à coefficient de température positif,
- au moins deux conducteurs (4) - en particulier des plaques de circuits imprimés (6, 7) - connectés de manière électroconductrice à l'élément chauffant à résistance électrique (2) au moins au nombre de un, pour faire passer le courant électrique à travers l'élément chauffant à résistance électrique (2) au moins au nombre de un et, ainsi, chauffer l'élément chauffant à résistance électrique (2),
- au moins un élément conducteur de la chaleur (11) servant à la transmission de chaleur à un fluide à chauffer, à partir de l'élément chauffant à résistance électrique (2) au moins au nombre de un,
- au moins un élément isolant électrique (22) qui isole électriquement les conducteurs (4) au moins au nombre de deux, de l'élément conducteur de la chaleur (11) au moins au nombre de un,
- au moins un tube (18), où
- les conducteurs (4) au moins au nombre de deux et l'élément chauffant à résistance électrique (2) au moins au nombre de un sont disposés à l'intérieur d'un espace creux (19) délimité par le tube (18), et le tube (18), sous l'effet d'une force de compression s'exerçant sur au moins une surface d'appui (14), vient en appui sur l'élément isolant électrique (22) au moins au nombre de un,
où le tube (18) s'appliquant sur la surface d'appui (14) au moins au nombre de un, en particulier perpendiculairement à un axe longitudinal (34) du tube (18) et parallèlement à un plan fictif défini par rapport à la surface d'appui (14), présente une épaisseur variable, où le tube (18) au moins au nombre de un est conçu comme un tube plat (13) comprenant deux parois à grands côtés (20) et deux parois à petits côtés (21), et les deux parois à petits côtés (21) sont serrées au moyen d'une force de compression s'exerçant à chaque fois sur une surface d'appui (14) s'appliquant sur les deux parois à grands côtés (20), de sorte qu'un ensemble chauffant combiné (8), qui comprend au moins un élément chauffant à résistance électrique (2), au moins deux conducteurs (4) et au moins un élément isolant électrique (22), est maintenu par action de force entre les deux parois à grands côtés (20), où le tube (18), au niveau des deux parois à petits côtés (21), est doté d'un point destiné au flambage (37), où le tube (18), au niveau du point destiné au flambage (37), présente une épaisseur inférieure à celle située à l'extérieur du point destiné au flambage (37), où l'élément chauffant à résistance électrique (2) au moins au nombre de un, les conducteurs (4) au moins au nombre de deux et l'élément isolant électrique (22) au moins au nombre de un sont assemblés pour former au moins un ensemble chauffant combiné (8), lequel ou lesquels ensemble(s) chauffant(s) combiné(s) est ou sont disposé(s) à l'intérieur du tube (18) au moins au nombre de un, **caractérisé en ce que** plusieurs tubes (18) comprenant chacun un ensemble chauffant combiné (8) et comprenant des ailettes ondulées (12) disposées entre les tubes (18) forment l'échangeur de chaleur (1), où une force de compression est appliquée, en particulier non pas au moyen d'un cadre de serrage ou non pas à l'aide d'un ressort, sur les parois (16) du tube (18) au moins au nombre de un, en particulier sur les parois à grands côtés (20) du tube plat (13) au moins au nombre de un.

2. Echangeur de chaleur selon la revendication 1, **caractérisé en ce que** la force de compression s'exerçant sur la surface d'appui (14) au moins au nombre de un, dans une coupe perpendiculaire à un axe longitudinal (34) du tube (18), est inférieure, côté bordure, à celle s'exerçant au milieu, en particulier la force de compression s'exerçant au milieu est au moins de 10 %, de 30 %, de 50 % ou de 100 % supérieure à celle s'exerçant côté bordure.

3. Echangeur de chaleur selon l'une ou plusieurs des revendications précédentes, **caractérisé en ce que** le rapport entre l'épaisseur au milieu du tube (18) s'appliquant sur la surface d'appui (14) au moins au nombre de un, et l'épaisseur sur le côté bordure du tube (18) s'appliquant sur la surface d'appui (14) au moins au nombre de un, est supérieur ou égal à 1,0 et, de préférence, inférieur à 1,5 ou à 1,2 ou à 1,1.

4. Echangeur de chaleur selon l'une quelconque ou plusieurs des revendications précédentes, **caractérisé en ce que** le rapport entre l'épaisseur au milieu du tube (18) s'appliquant sur la surface d'appui (14) au moins au nombre de un, et l'épaisseur du tube (18) à l'extérieur de la surface d'appui (14), est compris entre 1,1 et 2,0, de préférence entre 1,1 et 1,5, en particulier compris entre 1,2 et 1,7.

5. Echangeur de chaleur selon l'une quelconque ou plusieurs des revendications précédentes, **caractérisé en ce que** l'épaisseur du tube (18) s'appliquant sur la surface d'appui (14) au moins au nombre de un est comprise entre 0,7 mm et 3 mm, de préférence comprise entre 0,8 mm et 2 mm, en particulier comprise entre 0,9 mm et 1,7 mm et/ou le tube (18), en particulier sur les deux parois à petits côtés (21), est doté d'un point destiné au flambage (37), où le tube (18), au niveau du point destiné au flambage (37), présente de préférence une épaisseur inférieure à celle située à l'extérieur du point destiné au flambage (37) et/ou les deux parois à petits côtés (21) sont, sur le côté extérieur, courbées de façon convexe et/ou les deux parois à petits côtés (21) sont recourbées vers l'extérieur.

6. Echangeur de chaleur selon l'une quelconque ou plusieurs des revendications précédentes, **caractérisé en ce que** l'élément conducteur de la chaleur (11) au moins au nombre de un comprend le tube (18) au moins au nombre de un et/ou l'élément conducteur de la chaleur (11) au moins au nombre de un comprend des ailettes ondulées (12) qui, placées sur le côté extérieur, sont disposées sur le tube (18) au moins au nombre de un, en particulier par brasage ou par collage, et/ou les conducteurs (4) au moins au nombre de deux ne présentent aucun contact direct avec le tube (18) au moins au nombre de un et/ou la largeur de l'élément isolant électrique (22) au moins au nombre de un est supérieure à la largeur de la surface d'appui (14) au moins au nombre de un du tube (18) et/ou supérieure à la largeur du conducteur (4) au moins au nombre de un, dans une coupe perpendiculaire à l'axe longitudinal (34) du tube (18) .

7. Echangeur de chaleur selon l'une quelconque ou plusieurs des revendications précédentes, **caractérisé en ce que** l'élément isolant électrique (22) au moins au nombre de un se compose au moins en partie, en particulier en totalité, de céramique et/ou l'élément isolant électrique (22) au moins au nombre de un est configuré en forme de disque ou en forme de plaque, en particulier configuré de forme rectangulaire avec des encoches.

8. Système de climatisation d'un véhicule automobile, **caractérisé en ce que** le système de climatisation du véhicule automobile comprend au moins un échangeur de chaleur (1) selon l'une quelconque ou plusieurs des revendications précédentes.

9. Procédé de fabrication d'un échangeur de chaleur (1) selon l'une quelconque ou plusieurs des revendications 1 à 7, ou bien d'un système de climatisation d'un véhicule automobile selon la revendication 8, ledit procédé comprenant les étapes consistant :
- à fournir au moins un élément chauffant à résistance électrique (2), en particulier au moins un élément CTP (3),
- à fournir au moins deux conducteurs électriques (4), en particulier des plaques de circuits imprimés (6, 7), servant à faire passer le courant électrique à travers l'élément chauffant à résistance électrique (2) au moins au nombre de un,
- à fournir au moins un élément conducteur de la chaleur (11) servant à la transmission de chaleur à un fluide à chauffer, à partir de l'élément chauffant à résistance électrique (2) au moins au nombre de un,
- à fournir au moins un élément isolant électrique (22) servant à l'isolation électrique de l'élément conducteur de la chaleur (11) au moins au nombre de un, par rapport aux conducteurs (4) au moins au nombre de deux,
- à connecter les conducteurs (4) au moins au nombre de deux, à l'élément chauffant à résistance électrique (2) au moins au nombre de un,
- à assurer la liaison thermique de l'élément conducteur de la chaleur (11) au moins au nombre de un, avec les conducteurs (4) au moins au nombre de deux et/ou avec l'élément chauffant à résistance électrique (2) au moins au nombre de un,
- à assurer l'isolation électrique des conducteurs (4) au moins au nombre de deux, de préférence par rapport à l'élément conducteur de la chaleur (11) au moins au nombre de un, au moyen de l'élément isolant électrique (22) au moins au nombre de un, tandis que les conducteurs (4) au moins au nombre de deux, associés à l'élément chauffant à résistance électrique (2) au moins au nombre de un et à l'élément isolant électrique (22) au moins au nombre de un, sont assemblés pour former au moins un ensemble chauffant combiné,
- où il est prévu au moins l'élément conducteur de la chaleur (11) au moins au nombre de un et au moins un tube (18), où le tube (18) contient au moins un espace creux (19),
- l'ensemble chauffant combiné (8), se trouvant à l'intérieur de l'espace creux (19), est fixé par action de force sur le tube (18), tandis que le tube (18) est déformé et comprimé sur l'ensemble chauffant combiné (8), en particulier sur l'élément isolant électrique (22) au moins au nombre de un, de sorte que le tube (18), sous l'effet d'une force de compression, est comprimé sur l'élément chauffant combiné (8), en particulier sur l'élément isolant électrique (22) au moins au nombre de un, où le tube (18) est déformé et comprimé sur l'ensemble chauffant combiné (8), à l'intérieur d'un outil de compression (38).

10. Procédé selon la revendication 9, **caractérisé en ce que** le tube (18), avec l'ensemble chauffant combiné (8) contenu à l'intérieur de l'espace creux (19), est introduit dans l'outil de compression (38), puis, avec l'outil de compression (38), le tube (18) est déformé et comprimé sur l'ensemble chauffant combiné (8) et, ensuite, le tube (18) est sorti de l'outil de compression (38) et/ou le tube (18) au moins au nombre de un est fourni comme au moins un tube plat (13), et l'ensemble chauffant combiné (8) au moins au nombre de un est introduit dans l'espace creux (19) au moins au nombre de un qui est contenu par le tube plat (13) au moins au nombre de un, fermé en section, et, ensuite, le tube plat (13) est déformé contre les parois à petits côtés (21) et, ainsi, serré, de sorte que les parois à grands côtés (20) du tube plat (13), sous l'effet d'une force de compression, sont comprimées sur l'ensemble chauffant combiné (8), en particulier sur l'élément isolant électrique (22) au moins au nombre de un.

11. Procédé selon la revendication 9 ou 10, **caractérisé en ce que** le tube (18) s'appliquant sur au moins une surface d'appui (14) est déformé et comprimé sur l'ensemble chauffant combiné (8) placé dans l'outil de compression (38) et, en raison d'une courbure convexe de la surface d'appui (14), dans une coupe perpendiculaire à un axe longitudinal (34) du tube (18), le tube (18), d'abord au milieu de la surface d'appui (14) au moins au nombre de un, est appliqué et comprimé sur l'ensemble chauffant combiné (8) et, au cours d'un autre processus de déformation et de compression se produisant dans l'outil de compression (38), la surface d'appui (14) au moins au nombre de un est appliquée et comprimée également, côté bordure, sur l'ensemble chauffant combiné (8) et/ou le processus de compression se produisant dans l'outil de compression (38) est arrêté quand une valeur limite prédéfinie de la force de compression a été atteinte.

12. Procédé selon la revendication 10 ou selon les revendications 10 et 11, **caractérisé en ce que** les deux parois à petits côtés (21), en particulier au niveau d'un point destiné au flambage (37), sont recourbées vers l'extérieur au cours du processus de compression se produisant dans l'outil de compression (38) .

13. Procédé selon la revendication 10, selon les revendications 10 et 11 ou selon la revendication 12, **caractérisé en ce que** les parois à petits côtés (21) sont déformées au niveau d'un point destiné au flambage (37) et/ou les parois à petits côtés (21) sont déformées, tandis qu'une force de compression est appliquée, par l'outil de compression (38), sur les parois à grands côtés (20), et/ou le tube (18) est fourni en ayant un point destiné au flambage (37), en particulier sur les deux parois à petits côtés (21), où le tube (18), au niveau du point destiné au flambage (37), présente de préférence une épaisseur inférieure à celle située à l'extérieur du point destiné au flambage (37),
et/ou le tube (18) est fourni en ayant au moins une surface d'appui convexe (14), en particulier sur les deux parois à petits côtés (21), et/ou le tube (18) est fourni en étant courbé de façon concave à l'extérieur d'une surface de compression (15) placée à l'opposé de la surface d'appui (14) au moins au nombre de un et/ou le tube (18) est fourni d'une manière faisant que le rapport concernant l'épaisseur au milieu du tube (18) s'appliquant sur la surface d'appui (14) au moins au nombre de un, relativement à l'épaisseur, côté bordure, du tube (18) s'appliquant sur la surface d'appui (14) au moins au nombre de un, est supérieur ou égal à 1,0 et, de préférence, inférieur à 1,5 ou à 1,2 ou à 1,1 et/ou le tube (18) est fourni d'une manière faisant que le rapport concernant l'épaisseur au milieu du tube (18) s'appliquant sur la surface d'appui (14) au moins au nombre de un, relativement à l'épaisseur du tube (18) à l'extérieur de la surface d'appui (14), est compris entre 1,1 et 2,0, de préférence compris entre 1,1 et 1,5, en particulier compris entre 1,2 et 1,7 et/ou le tube (18) est fourni d'une manière faisant que la concavité formée sur la surface de compression (15) est comprise entre 0,1 mm et 1,0 mm et/ou le tube (18) est fourni d'une manière faisant que l'épaisseur au milieu du tube (18) s'appliquant sur la surface d'appui (14) au moins au nombre de un est inférieure à 1,5 mm et/ou le tube (18) est fourni d'une manière faisant que le tube (18) s'appliquant sur la surface d'appui (14) au moins au nombre de un est, dans une coupe perpendiculaire à un axe longitudinal (34) du tube (18), courbé de façon convexe et/ou le tube (18) est fourni d'une manière faisant que le tube (18), dans une coupe perpendiculaire à l'axe longitudinal (34) du tube (18), est courbé de façon concave à l'extérieur d'une surface de compression (15) placée à l'opposé de la surface d'appui (14) au moins au nombre de un.
